# FASCICULE DE BREVET EUROPEEN

(11) **EP 1 557 553 B1**
(45) Date de publication et mention de la délivrance du brevet: **23.08.2006**
(21) Numéro de dépôt: 05290134.5
(22) Date de dépôt: 21.01.2005
(51) Int. Cl.: F02K 3/10, F23R 3/18

(54) **Bras monobloc accroche-flammes pour un dispositif de post-combustion d'un turboréacteur à double flux**
Einblockarm für eine Nachverbrennungsvorrichtung eines Triebwerkes mit Doppelströmung
Monobloc arm for a postcombustion device of a double flow turboengine

(30) Priorité: 23.01.2004 FR 0400651
(43) Date de publication de la demande: 27.07.2005
(73) Titulaire: SNECMA, 75015 Paris (FR)
(72) Inventeur: Blanchard, Stéphane Pierre Guillaume, 77590 Chartrettes (FR); Touchaud, Stéphane Henri Guy, 75012 Paris (FR); Pancou, Thierry Gabriel, 91250 Saintry Sur Seine (FR); Conete, Eric, 33700 Merignac (FR); Camy, Pierre, 33160 St Medard en Jalles (FR); Habarou, Georges, 33110 Le Bouscat (FR)
(74) Mandataire: Plaçais, Jean Yves

(56) Documents cités:
- FR-A- 2 587 455
- FR-A- 2 687 734
- FR-A- 2 699 226
- FR-A- 2 699 227
- US-A- 5 022 805
- US-A- 5 090 198
- US-A- 5 103 638
- US-A- 5 367 873

## Description

L'invention concerne le domaine des turboréacteurs à double flux, et plus particulièrement les dispositifs de post-combustion que comprennent de tels turboréacteurs.

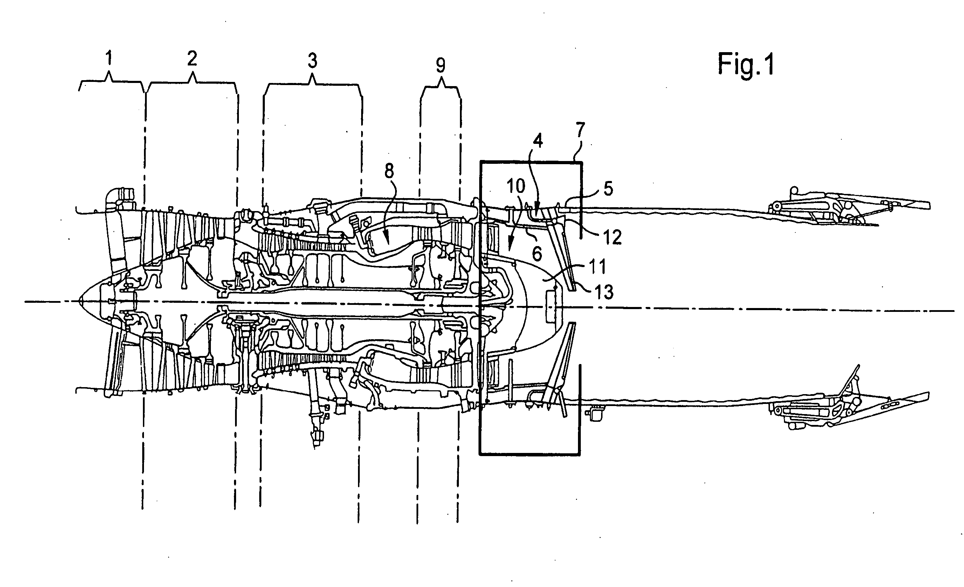

Dans un turboréacteur à double flux, du type de celui illustré sur la figure 1, le flux d'air qui est aspiré par une soufflante 1 alimente un compresseur basse pression 2. Une première partie du flux d'air comprimé alimente un compresseur haute pression 3, tandis qu'une seconde partie (complémentaire) est destinée à alimenter plus en aval un premier passage 4 défini entre un carter annulaire externe 5 et un premier carter annulaire interne 6 (habituellement appelé tôle de confluence et servant à séparer le flux primaire du flux secondaire avant qu'ils ne soient mélangés) d'un dispositif de post-combustion 7. Le flux d'air comprimé par le compresseur haute pression 3 alimente une chambre de combustion 8 qui alimente en gaz d'échappement une turbine 9 comprenant un étage haute pression suivi d'un étage basse pression et dont la sortie alimente un second passage 10 défini entre le premier carter annulaire interne 6 (ou tôle de confluence) et un second carter annulaire interne 11 (habituellement appelé cône d'échappement) du dispositif de post-combustion 7.

Les gaz d'échappement qui alimentent le second passage 10 présentent une température élevée et constituent ce que l'on appelle habituellement un flux primaire (ou flux chaud). L'air qui alimente le premier passage 4 présente une température sensiblement inférieure à celle du flux primaire et constitue ce que l'on appelle habituellement un flux secondaire (ou flux froid).

Le dispositif de post-combustion 7 permet d'effectuer une seconde combustion grâce à l'injection de carburant dans les flux primaire et secondaire. Une partie de cette injection s'effectue à l'aide d'un anneau brûleur 12 placé au voisinage du premier carter interne 6 (ou tôle de confluence), dans le passage du flux secondaire ou du flux primaire. Plus précisément, l'anneau brûleur 12 permet d'injecter de façon homogène une partie du carburant et de stabiliser la flamme.

Selon le mode de réalisation choisi, l'anneau brûleur 12 est porté par des bras de support 13, également appelés "bras accroche flamme", solidarisés au carter externe par l'intermédiaire d'un élément de support et/ou au premier carter interne par l'intermédiaire de moyens de fixation.

La solidarisation des bras au carter externe par l'intermédiaire d'un élément de support est notamment décrite dans le document FR 2699226. L'élément de support et le bras associé étant solidarisés l'un à l'autre dans une région balayée par le flux primaire, les pièces qui assurent leur solidarisation sont donc soumises non seulement à d'importantes contraintes thermiques, mais également à des efforts dits "de pression de veine". En outre, chaque bras constitue avec une portion d'anneau brûleur une sous-structure monobloc dont la fabrication est particulièrement difficile à réaliser en raison, notamment, de la présence de plusieurs bords arrondis.

La solidarisation des bras au premier carter interne, par l'intermédiaire de moyens de fixation, est notamment décrite dans les documents US 5,103,638, GB 2 295 214, US 5,022,805 et US 5,090,198. Dans chacun de ces documents, la solidarisation des bras, en matériau composite, doit s'effectuer sur un carter interne métallique placé à l'interface entre les flux primaire et secondaire. Il en résulte un différentiel de dilatation thermique entre les bras et le carter qui est compensé par l'utilisation de moyens de fixation complexes et de pièces d'interface.

Il a également été proposé dans le document FR 2699227 de former une structure monobloc constituée des carters externe et internes, de l'anneau brûleur et des bras. Mais, une telle structure est difficile à fabriquer, notamment du fait qu'elle nécessite d'utiliser des matériaux différents pour les pièces "froides" et les pièces "chaudes". En outre, du fait du caractère monobloc de cette structure les opérations de maintenance sont difficiles et l'endommagement de l'une de ses parties impose son remplacement complet.

L'invention a donc pour but d'améliorer la situation.

Elle propose à cet effet un bras (accroche-flammes) de support pour un dispositif de post-combustion comprenant, comme indiqué dans la partie d'introduction, des premier et second carters annulaires internes, définissant un passage pour le flux primaire, et un carter annulaire externe définissant avec le premier carter annulaire interne un passage pour le flux secondaire.

Ce bras comprend une structure monobloc en matériau composite comportant deux parois solidaires, agencées de manière à définir une gorge présentant un profil sensiblement en V, et se caractérise par le fait qu'il comporte des premières parties d'extrémité, réunies et conformées afin de définir un pied, et des secondes parties d'extrémité, conformées afin de définir chacune au moins une bride destinée à être solidarisée au carter externe.

Le bras selon l'invention peut comporter d'autres caractéristiques qui pourront être prises séparément ou en combinaison, et notamment :
- ses deux parois peuvent présenter un écartement non constant entre leurs premières et secondes parties d'extrémité de sorte que le profil de la gorge puisse varier. Dans ce cas, l'écartement varie par exemple de façon sensiblement continue, en croissant, des premières parties d'extrémité vers les secondes parties d'extrémité de sorte que le profil de la gorge puisse varier sensiblement continûment,
- ses deux parois peuvent présentent une épaisseur non constante entre leurs premières et secondes parties d'extrémité. Dans ce cas, les deux parois présentent par exemple une épaisseur plus importante au niveau de leurs secondes parties d'extrémité afin de renforcer leur résistance,
- ses deux parois peuvent comporter chacune, à un même niveau choisi, une échancrure, de manière à définir un logement pouvant recevoir un support d'anneau brûleur. Par exemple ce support d'anneau brûleur est solidarisé aux deux parois au voisinage de leur échancrures, éventuellement à l'aide de rivets. Par ailleurs, les échancrures peuvent être formées dans une zone d'une partie des deux parois qui est destinée à être placée dans le passage du flux secondaire. Cette zone est alors préférentiellement placée au voisinage du premier carter interne,
- chaque bride peut être solidarisée au carter externe par au moins un boulon, avec interposition d'une contreplaque du côté exposé au flux secondaire,
- la structure monobloc peut être réalisée dans un matériau composite à matrice céramique.

L'invention concerne également un dispositif de post-combustion, du type précité, pour un turboréacteur à double flux, comprenant au moins trois bras de support, du type de ceux présentés ci-avant, selon l'une des caractéristiques précédentes, solidarisés à son carter externe.

Un tel dispositif peut par exemple comprendre dans son passage dédié au flux secondaire une chemise de protection thermique définissant avec le carter externe un canal de post-combustion pour une partie du flux secondaire. Dans ce cas, le support d'anneau brûleur de chaque bras de support est préférentiellement installé à un niveau compris entre les niveaux respectifs de la chemise de protection thermique et du premier carter interne.

D'autres caractéristiques et avantages de l'invention apparaîtront à l'examen de la description détaillée ci-après, et des dessins annexés, sur lesquels :
- la figure 1 illustre de façon schématique, dans une vue en coupe longitudinale, un turboréacteur à double flux,
- la figure 2A est une première vue en perspective d'un exemple de réalisation d'un bras selon l'invention, avant fixation d'un support d'anneau brûleur,
- la figure 2B est une seconde vue en perspective du bras de la figure 2A,
- la figure 3 est une vue en perspective d'un exemple de réalisation d'un bras selon l'invention, après fixation d'un support d'anneau brûleur,
- la figure 4 est une vue du dessus du bras de la figure 3,
- la figure 5 est une vue en coupe, selon l'axe V-V, du bras de la figure 3,
- la figure 6 est une vue en coupe, selon l'axe VI-VI, du bras de la figure 3,
- la figure 7 est une vue de côté du bras de la figure 3, après solidarisation au carter externe du dispositif de post-combustion,
- les figures 8A et 8B sont deux vues en perspective illustrant selon deux angles différents l'assemblage de la figure 7.

Les dessins annexés pourront non seulement servir à compléter l'invention, mais aussi contribuer à sa définition, le cas échéant.

L'invention concerne un bras accroche-flammes de support pour un dispositif de post-combustion d'un turboréacteur du type de celui présenté dans la partie d'introduction, en référence à la figure 1.

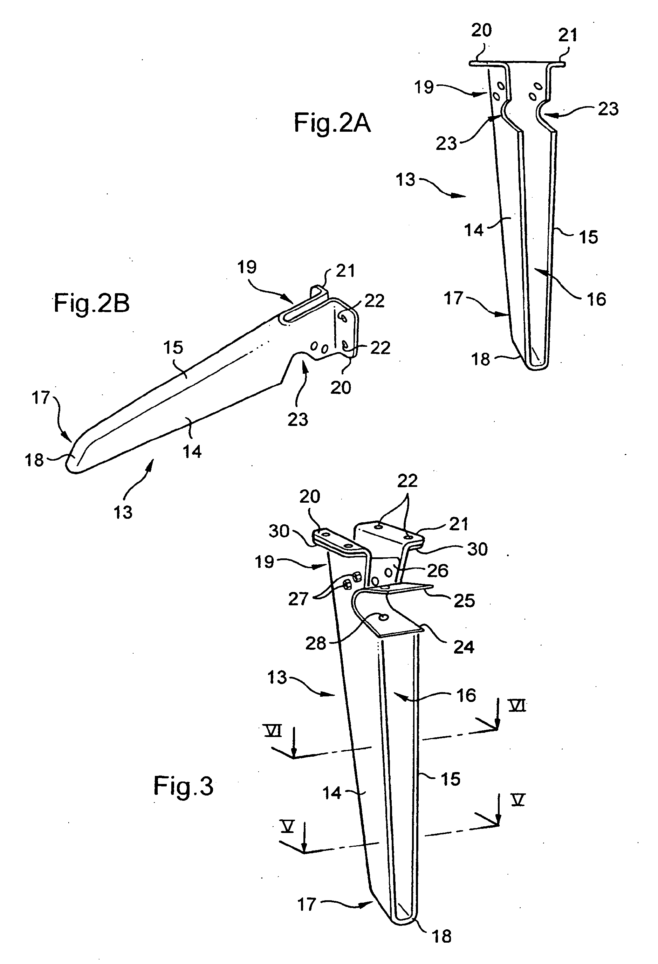

On se réfère tout d'abord aux figures 1, 2A et 2B pour décrire un bras de support 13 selon l'invention.

Le bras de support (ou bras accroche-flammes) 13, illustré sur les figures 2A et 2B, est réalisé sous la forme d'une structure monobloc en matériau composite résistant aux températures élevées. Ce matériau composite est préférentiellement à matrice céramique. Par exemple, la structure monobloc est réalisée à partir d'une préforme en fibres, notamment de carbure de silicium ou de carbone, dans laquelle est infiltrée une matrice céramique en phase liquide ou gazeuse. Ainsi, on peut par exemple réaliser la structure monobloc avec du CERASEP ® 410-12.

L'utilisation d'un matériau composite est particulièrement avantageuse du fait qu'elle permet un gain de masse (comparé aux matériaux métalliques) et une augmentation de la durée de vie, en particulier en présence de températures de fonctionnement élevées.

La structure monobloc comporte deux parois 14 et 15 sensiblement symétriques et se rejoignant sur un côté longitudinal de manière à définir une gorge 16 dont le profil, dans une section transverse, est sensiblement en V.

Ces deux parois 14 et 15 comportent des premières parties d'extrémité 17 qui sont réunies et conformées afin de définir un pied 18 qui est préférentiellement en forme de biseau de manière à favoriser l'écoulement du flux primaire.

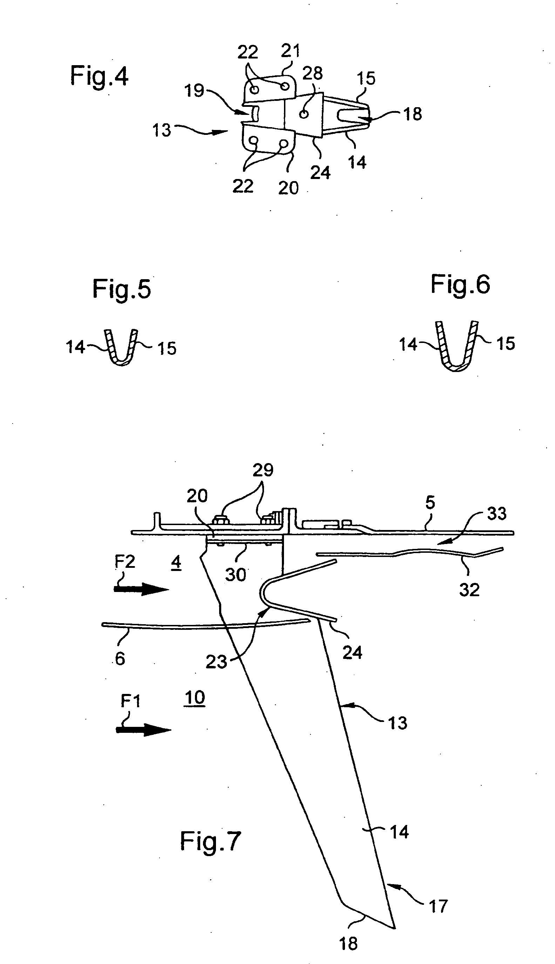

Par ailleurs, chaque paroi 14 et 15 comporte également une seconde partie d'extrémité 19, opposée au pied 18 et conformée de manière à définir au moins une bride 20, 21 destinée à être solidarisée au carter annulaire externe 5, comme on le verra plus loin en référence à la figure 7. Pour permettre cette solidarisation, par exemple à l'aide de boulons, chaque bride 20, 21 comporte au moins un orifice traversant 22, et de préférence au moins deux, comme illustré sur la figure 2B.

De plus, chaque paroi 14, 15 comporte préférentiellement une échancrure (ou encoche) 23 à un niveau choisi (identique pour les deux). Ces deux échancrures 23 définissent un logement dans lequel peut être placé un support d'anneau brûleur 24, comme illustré sur la figure 3.

Le niveau où sont formées les échancrures 23 est choisi en fonction de l'endroit où doit être placé l'anneau brûleur. Dans l'exemple illustré, elles sont réalisées à proximité des secondes extrémités 19 afin que l'anneau brûleur soit placé dans le conduit 4 dédié au flux secondaire. Mais, dans une variante, elles pourraient être placées dans une partie centrale des parois 14 et 15, voire même au voisinage du pied 18, afin que l'anneau brûleur soit placé dans le conduit 10 dédié au flux primaire.

Par exemple, comme illustré sur la figure 3, le support d'anneau brûleur 24 comporte une partie centrale 25, définissant une gorge ouverte des deux côtés et en forme de V, et prolongée vers l'arrière, sensiblement perpendiculairement, par deux parties latérales 26 solidarisées à des faces internes des deux parois 14 et 15, au voisinage de leur échancrures 23. Cette solidarisation peut par exemple se faire à l'aide de rivets 27.

Le support d'anneau brûleur 24 est par exemple réalisé dans un matériau métallique lorsqu'il est situé dans la zone secondaire "froide". Mais, il peut être également réalisé dans un matériau composite, notamment lorsqu'il est installé dans la zone primaire "chaude".

Afin de permettre la solidarisation de l'anneau brûleur dans le support d'anneau brûleur 24, celui-ci comporte préférentiellement au moins un orifice traversant 28 sur chacune des deux ailes qui constituent sa partie centrale 25.

Comme le montrent les vues en coupe selon les axes V-V et VI-VI de la figure 3, illustrées sur les figures 5 et 6, ainsi que la vue du dessus illustrée sur la figure 4, l'écartement entre les deux parois 14 et 15 peut ne pas être constant du pied 18 aux secondes parties d'extrémité 19. En d'autres termes, le profil en V de la gorge 16 peut varier. Plus précisément, l'écartement croît ici de façon sensiblement continue du pied 18 vers les secondes parties d'extrémité 19.

Par ailleurs, bien que cela ne soit pas représenté sur les figures, l'épaisseur des deux parois 14 et 15 peut ne pas être constante du pied 18 jusqu'aux secondes parties d'extrémité 19. Il peut en effet être avantageux qu'une partie du bras de support 13, soumise à des contraintes plus importantes que les autres parties, soit renforcée. Ainsi, une surépaisseur au niveau des secondes parties d'extrémité 19 peut leur permettre de mieux résister aux contraintes thermiques et aux efforts de pression de veine.

Un dispositif de post-combustion 7 d'un turboréacteur à double flux comporte au moins trois bras de support 13 du type de ceux décrits ci-avant, et plus préférentiellement au moins quatre. Dans certains turboréacteurs, le nombre de bras peut être égal à neuf (9).

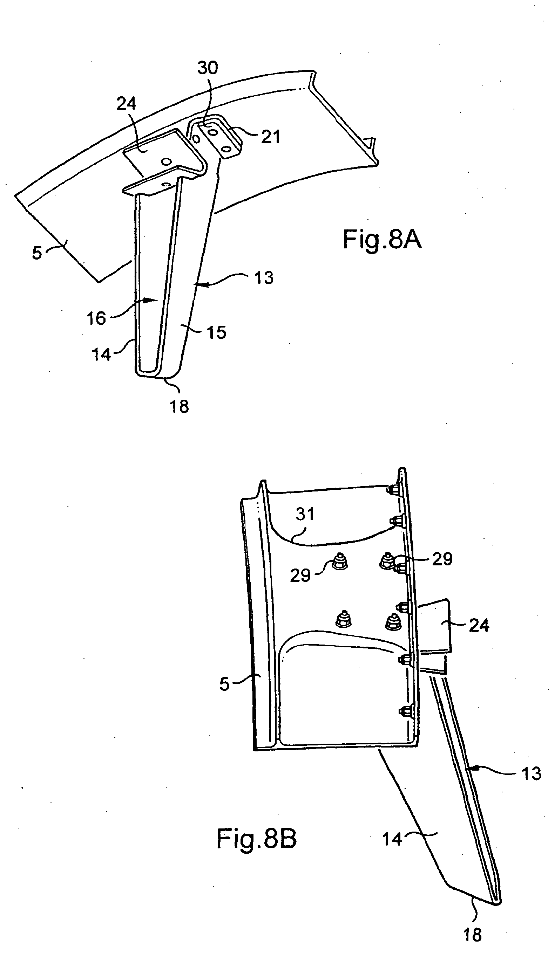

On se réfère maintenant aux figures 7, 8A et 8B pour décrire un exemple de solidarisation d'un bras de support 13 au carter annulaire externe 5 d'un dispositif de post-combustion 7.

Comme évoqué précédemment, chaque bras de support 13 est solidarisé par ses brides 20 et 21 au carter annulaire externe 5.

La solidarisation s'effectuant directement sur le carter annulaire externe 5, dans un environnement "froid" (typiquement inférieur à environ 200°C), cela ne génère pas de problème de différentiel de dilatation thermique entre le bras de support 13 et le carter annulaire externe 5. On peut donc utiliser des moyens de fixation (ou solidarisation) particulièrement simples, comme par exemple des boulons 29. On peut par exemple utiliser deux boulons 29 (et au minimum un) pour immobiliser chaque bride 20, 21.

Une fois solidarisé, chaque bras s'étend sensiblement suivant une direction radiale par rapport à l'axe de rotation de la turbine 9, qui constitue également l'axe de révolution des carters externe 5 et internes 6 et 11. Il est rappelé que l'on entend ici par carter interne 6 et carter interne 11 ce que l'homme de l'art appelle respectivement la tôle de confluence et le cône d'échappement.

Comme cela est illustré sur la figure 7, le dispositif de post-combustion 7 peut comporter une chemise de protection thermique 32, intercalée entre le premier carter annulaire interne 6 (ou tôle de confluence) et le carter annulaire externe 5, et définissant avec ce dernier un canal de post-combustion 33 dans lequel circule une partie au moins du flux secondaire. Cette chemise de protection thermique 32 est généralement une tôle ondulée et multiperforée destinée à contenir les gaz de post-combustion (tout comme les parois d'une chambre principale), et à protéger le carter annulaire externe 5 du flux chaud. En présence d'une telle chemise de protection thermique 32, les échancrures 23 des parois 14 et 15 de chaque bras de support 13 sont formées à un niveau choisi de manière à ce que le support d'anneau brûleur 24 soit au moins en partie encadré par le carter annulaire intermédiaire 32 et le premier carter annulaire interne 6 (ou tôle de confluence).

Par ailleurs, comme cela est mieux illustré sur la figure 3, on peut placer une contreplaque de renfort et/ou de protection 30 en dessous de la face externe (opposée au carter externe 5) de chaque bride 20, 21 afin qu'elle soit interposée entre cette dernière et le ou les écrous. Cela permet d'augmenter la rigidité des brides 20 et 21 et de renforcer la résistance du bras de support 13 aux contraintes mécaniques. Cette contreplaque 30 est de préférence en métal.

Il est important de noter que le profil en V et la forme du pied 18 de chaque bras de support 13 sont choisis de manière à optimiser l'écoulement des flux primaire (flèche F1 de la figure 7) et secondaire (flèche F2 de la figure 7) et donc d'obtenir un aérodynamisme correspondant aux performances attendues.

Par ailleurs, un bras de support 13 peut éventuellement loger dans sa gorge 16 un dispositif de carburation interne. En outre, en raison du matériau composite utilisé pour réaliser le bras de support 13, ce dernier peut supporter des températures élevées, de sorte qu'il n'est pas nécessaire de l'équiper d'un dispositif de ventilation interne destiné à refroidir la partie de son bord d'attaque qui est balayée par le flux primaire.

L'invention ne se limite pas aux modes de réalisation de bras de support et de dispositif de post-combustion décrits ci-avant, seulement à titre d'exemple, mais elle englobe toutes les variantes que pourra envisager l'homme de l'art dans le cadre des revendications ci-après.

## Revendications

1. Bras de support (13) pour un dispositif de post-combustion (7) d'un turboréacteur à double flux, ledit dispositif (7) comprenant des premier (6) et second (11) carters annulaires internes, définissant un passage (10) pour un flux primaire, et un carter annulaire externe (5) définissant avec ledit premier carter annulaire interne (6) un passage (4) pour un flux secondaire, comprenant une structure monobloc en matériau composite comportant deux parois solidaires (14, 15), agencées de manière à définir une gorge (16) présentant un profil sensiblement en V, et **caractérisé en ce qu'** il comporte des premières parties d'extrémité (17), réunies et conformées de manière à définir un pied (18), et des secondes parties d'extrémité (19), conformées de manière à définir chacune au moins une bride (20, 21) propre à être solidarisée audit carter externe (5).

2. Bras selon la revendication 1, **caractérisé en ce que** lesdites parois (14, 15) présentent un écartement non constant entre lesdites premières (17) et secondes (19) parties d'extrémité de sorte que le profil de ladite gorge (16) varie.

3. Bras selon la revendication 2, **caractérisé en ce que** ledit écartement varie sensiblement continûment, en croissant, des premières parties d'extrémité (17) vers les secondes parties d'extrémité (19) de sorte que le profil de ladite gorge (16) varie sensiblement continûment.

4. Bras selon l'une des revendications 1 à 3, **caractérisé en ce que** lesdites parois (14, 15) présentent une épaisseur non constante entre lesdites premières (17) et secondes (19) parties d'extrémité.

5. Bras selon la revendication 4, **caractérisé en ce que** lesdites parois (14, 15) présentent une épaisseur plus importante au niveau desdites secondes parties d'extrémité (19).

6. Bras selon l'une des revendications 1 à 5, **caractérisé en ce que** lesdites parois (14, 15) comportent chacune, à un même niveau choisi, une échancrure (23), de manière à définir un logement propre à recevoir un support d'anneau brûleur (24).

7. Bras selon la revendication 6, **caractérisé en ce que** ledit support d'anneau brûleur (24) est solidarisé auxdites parois (14,15) au voisinage desdites échancrures (23).

8. Bras selon l'une des revendications 6 et 7, **caractérisé en ce que** ledit support d'anneau brûleur (24) est solidarisé auxdites parois (14, 15) par des rivets (27).

9. Bras selon l'une des revendications 6 à 8, **caractérisé en ce que** lesdites échancrures (23) sont formées dans une zone d'une partie desdites parois (14, 15) destinée à être placée dans le passage du flux secondaire.

10. Bras selon la revendication 9, **caractérisé en ce que** ladite zone est destinée à être placée au voisinage dudit premier carter interne (6).

11. Bras selon l'une des revendications 1 à 10, **caractérisé en ce que** chaque bride (20, 21) est propre à être solidarisée audit carter externe (5) par au moins un boulon (29), avec interposition d'une contreplaque (30) du côté de la bride exposé audit flux secondaire.

12. Bras selon l'une des revendications 1 à 11, **caractérisé en ce que** ladite structure monobloc est réalisée dans un matériau composite à matrice céramique.

13. Dispositif de post-combustion (7) pour un turboréacteur à double flux, comprenant des premier (6) et second (11) carters annulaires internes, définissant un passage (10) pour un flux primaire, et un carter annulaire externe (5) définissant avec ledit premier carter annulaire interne (6) un passage (4) pour un flux secondaire, **caractérisé en ce qu'**il comprend au moins trois bras de support (13), selon l'une des revendications précédentes, solidarisés audit carter annulaire externe (5).

14. Dispositif selon la revendication 13, **caractérisé en ce qu'**il comprend dans le passage dudit flux secondaire (4) une chemise de protection thermique (32) définissant avec ledit carter annulaire externe (5) un canal de post-combustion (33) pour une partie dudit flux secondaire, et **en ce que** ledit support d'anneau brûleur (24) de chaque bras de support (13) est placé à un niveau compris entre le niveau de ladite chemise de protection thermique (32) et le niveau dudit premier carter annulaire interne (6).

## Claims

1. Support arm (13) for a post-combustion device (7) of a dual-flow turbojet, the device (7) comprising first (6) and second (11) internal annular casings, defining a passage (10) for a primary flow, and an external annular casing (5) defining with the first internal annular casing (6) a passage (4) for a secondary flow comprising a one-piece structure composed of composite material comprising two rigidly connected walls (14, 15) contrived so as to define a recess (16) having a substantially V-shaped profile and **characterised in that** it comprises first end parts (17) joined and shaped so as to define a foot (18), and second end parts (19) shaped so as each to define at least one flange (20, 21) capable of being connected to the external casing (5).

2. Arm according to claim 1, **characterised in that** the walls (14, 15) have a non-constant spacing between the first (17) and second (19) end parts such that the profile of the recess (16) varies.

3. Arm according to claim 2, **characterised in that** the spacing varies substantially continuously by increasing from the first end parts (17) towards the second end parts (19) in such a manner that the profile of the recess (16) varies substantially continuously.

4. Arm according to one of claims 1 to 3, **characterised in that** the walls (14, 15) have a non-constant thickness between the first (17) and second (19) end parts.

5. Arm according to claim 4, **characterised in that** the walls (14, 15) have a greater thickness at the second end parts (19).

6. Arm according to one of claims 1 to 5, **characterised in that** the walls (14, 15) each comprise, at a selected level, a scallop (23) such as to define a seat capable of receiving a burner ring support (24).

7. Arm according to claim 6, **characterised in that** the burner ring support (24) is fixed to the walls (14, 15) in the vicinity of the scallops (23).

8. Arm according to either of claims 6 or 7, **characterised in that** the burner ring support (24) is connected to the walls (14, 15) by rivets (27).

9. Arm according to one of claims 6 to 8, **characterised in that** the scallops (23) are formed in a zone of part of the walls (14, 15) intended to be placed in the passage of the secondary flow.

10. Arm according to claim 9, **characterised in that** the zone is intended to be located in the vicinity of the first internal casing (6).

11. Arm according to one of claims 1 to 10, **characterised in that** each flange (20, 21) is capable of being fixed to the external casing (5) by at least one bolt (29), with the interposition of a backplate (30) on the side of the flange exposed to the secondary flow.

12. Arm according to one of claims 1 to 11, **characterised in that** the one-piece structure is formed from a composite material with a ceramic matrix.

13. Post-combustion device (7) for a dual-flow turbojet, comprising first (6) and second (11) internal annular casings, defining a passage (10) for a primary flow, and an external annular casing (5) defining with the first internal annular casing (6) a passage (4) for a secondary flow, **characterised in that** it comprises at least three support arms (13), according to one of the preceding claims, connected to the external annular casing (5).

14. Device according to claim 13, **characterised in that** it comprises in the passage of the secondary flow (4) a thermal protection jacket (32) defining with the external annular casing (5) a post-combustion channel (33) for part of the secondary flow, and **in that** the burner ring support (24) of each support arm (13) is placed at a level between the level of the thermal protection jacket (32) and the level of the first internal annular casing (6).

## Patentansprüche

1. Tragarm (13) für einen Nachbrenner (7) einer Doppelstrom-Strahlturbine, wobei die Vorrichtung (7) ein erstes (6) und ein zweites (11) ringförmiges inneres Gehäuse aufweist, die einen Kanal (10) für einen Primärstrom definieren, und ein ringförmiges äußeres Gehäuse (5) aufweist, der mit dem ersten ringförmigen inneren Gehäuse (6) einen Kanal (4) für einen Sekundärstrom definiert, wobei er eine Monoblockstruktur aus einem Verbundmaterial aufweist, das zwei verbundene Seitenwände (14, 15) aufweist, die derart angelenkt sind, dass sie einen Hals (16) definieren, der ein Profil im Wesentlichen in Form eines V aufweist, und **dadurch gekennzeichnet, dass** er erste Endabschnitte (17), die verbunden sind und derart ausgebildet sind, dass sie einen Fuß (18) bilden, und zweite Endabschnitte (19) aufweist, die derart ausgebildet sind, dass sie jeweils wenigstens einen Flansch (20, 21) definieren, der geeignet ist, mit dem äußeren Gehäuse (5) verbunden zu werden.

2. Arm nach Anspruch 1, **dadurch gekennzeichnet, dass** die Seitenwände (14, 15) eine nichtkonstante Beabstandung zwischen den ersten (17) und zweiten (19) Endabschnitten aufweist, derart, dass das Profil des Halses (16) variiert.

3. Arm nach Anspruch 2, **dadurch gekennzeichnet, dass** die Beabstandung im Wesentlichen kontinuierlich variiert, unter Anwachsen der ersten Endabschnitte (17) zu den zweiten Endabschnitten (19), derart, dass das Profil des Halses (16) im Wesentlichen kontinuierlich variiert.

4. Arm nach einem der Ansprüche 1 bis 3, **dadurch gekennzeichnet, dass** die Seitenwände (14, 15) eine nichtkonstante Dicke zwischen den ersten (17) und zweiten (19) Endabschnitten aufweisen.

5. Arm nach Anspruch 4, **dadurch gekennzeichnet, dass** die Seitenwände (14, 15) eine Dicke aufweisen, die auf der Höhe der zweiten Endabschnitte (19) größer ist.

6. Arm nach einem der Ansprüche 1 bis 5, **dadurch gekennzeichnet, dass** die Seitenwände (14, 15) jeweils auf einem selben ausgewählten Niveau, einen Einschnitt (23) aufweisen, derart, dass sie eine Aufnahme definieren, die in der Lage ist, ein Lager des Brennerrings (24) aufzunehmen.

7. Arm nach Anspruch 6, **dadurch gekennzeichnet, dass** das Brennerringlager (24) mit den Seitenwänden (14, 15) in der Nähe der Einschnitte (23) verbunden ist.

8. Arm nach Anspruch 6 oder 7, **dadurch gekennzeichnet, dass** das Brennerringlager (24) mit den Seitenwänden (14, 15) durch Nieten (27) verbunden ist.

9. Arm nach einem der Ansprüche 6 bis 8, **dadurch gekennzeichnet, dass** die Einschnitte (23) in einer Zone eines Bereichs der Seitenwände (14, 15) ausgebildet sind, die dazu dient, in den Kanal des Sekundärstromes gesetzt zu werden.

10. Arm nach Anspruch 9, **dadurch gekennzeichnet, dass** die Zone dazu dient, in die Nähe des ersten inneren Gehäuses (6) gesetzt zu werden.

11. Arm nach einem der Ansprüche 1 bis 10, **dadurch gekennzeichnet, dass** jeder Flansch (20, 21) in der Lage ist, mit dem äußeren Gehäuse (5) durch wenigstens eine Schraube (29) verbunden zu werden, mit Zwischensetzen einer Gegenplatte (30) auf der Seite des Flansches, der dem Sekundärstrom ausgesetzt ist.

12. Arm nach einem der Ansprüche 1 bis 11, **dadurch gekennzeichnet, dass** die Monoblockstruktur aus einem Verbundmaterial mit keramischer Matrix verwirklicht ist.

13. Nachbrennervorrichtung (7) für eine Doppelstrom-Strahlturbine, mit einem ersten (6) und einem zweiten (11) inneren ringförmigen Gehäuse, die einen Kanal (10) für einen Primärstrom definieren, und einem äußeren ringförmigen Gehäuse (5), das mit dem ersten inneren ringförmigen Gehäuse (6) einen Kanal (4) für einen Sekundärstrom definiert, **dadurch gekennzeichnet, dass** sie wenigstens drei Tragarme (13) nach einem der vorangehenden Ansprüche aufweist, die mit dem externen ringförmigen Gehäuse (5) verbunden sind.

14. Vorrichtung nach Anspruch 13, **dadurch gekennzeichnet, dass** sie in dem Sekundärstromkanal (4) eine Wärmeschutzschürze (32) aufweist, die mit dem äußeren ringförmigen Gehäuse (5) einen Nachbrennerkanal (33) für einen Teil des Sekundärstromes bildet, und dass das Brennerringlager (24) eines jeden Tragarms (13) auf eine Höhe zwischen der Höhe der Wärmeschutzschürze (32) und der Höhe des ersten inneren ringförmigen Gehäuses (6) gesetzt ist.
